# EUROPEAN PATENT SPECIFICATION

(11) **EP 0 813 152 B1**
(45) Date of publication and mention of the grant of the patent: **13.11.2002**
(21) Application number: 97301381.6
(22) Date of filing: 03.03.1997
(51) Int. Cl.: G06F 12/14, G06F 12/02

(54) **Memory protection mechanism**
Speicherschutzmechanismus
Mécanisme de protection de mémoire

(30) Priority: 22.03.1996 US 621121
(43) Date of publication of application: 17.12.1997
(73) Proprietor: SHARP KABUSHIKI KAISHA, Osaka-shi, Osaka-fu 545-0013 (JP); SHARP MICROELECTRONICS TECHNOLOGY, INC., Camas, WA 98607 (US)
(72) Inventor: Spaderna, Dieter, Portland, Oregon 97229 (US); Lea, Earl Randy, Vancouver, WA 98686 (US)
(74) Representative: Brown, Kenneth Richard

(56) References cited:
- US-A- 5 440 710
- PROCEEDINGS OF THE INTERNATIONAL CONFERENCE ON COMPUTER DESIGN: VL IN COMPUTERS AND PROCESSORS, CAMBRIDGE, OCT. 2 - 4, 1989, no. -, 2 October 1989, INSTITUTE OF ELECTRICAL AND ELECTRONICS ENGINEERS, pages 134-137, XP000090458 GROVES R D ET AL: "AN IBM SECOND GENERATION RISC PROCESSOR ARCHITECTURE"
- IEEE INTERNATIONAL SOLID STATE CIRCUITS CONFERENCE, vol. 37, 1 February 1994, page 212/213, 341 XP000507123 DAC PHAM ET AL: "TP 12.6: A 3.0W 75SPECINT92 85SPECFP92 SUPERSCALAR RISC MICROPROCESSOR"
- COMPUTER, vol. 20, no. 3, March 1987, NEW YORK US, pages 48-67, XP002034222 FURHT B ET AL: "A SURVEY OF MICROPROCESSOR ARCHITECTURES FOR MEMORY MANAGEMENT"

## Description

### Field of the Invention

The invention relates to integrated circuits, and specifically to memory protection mechanism for use in an integrated circuit having a reduced instruction set computer (RISC) central processing unit (CPU), which may be used in portable devices.

### Background of the Invention

Portable devices include electronic instruments such as personal information manager, cellular telephones, digital cameras, hand-held games, bar-code scanners, medical equipment, electronic instrumentation, and navigation systems, specifically global positioning satellite navigation systems.

To be commercially successful, portable devices require integrated circuits which are low in cost, have low power requirements to insure long battery life, and have high standards of performance to insure that their output is accurate and usable. Additionally, the interface between the integrated circuit and the remainder of the portable device must be of a plug-and-play design so that a single type of integrated circuit may be used with a number of portable devices. Part of such flexibility is that the designer of a portable device must be able to easily incorporate the IC into the device as an off-the-shelf component, which does not require any internal modification to be used in a variety of applications.

The "computing power" found in integrated circuit CPUs, such as the Intel 80*86 and Pentium® series chips, and the Motorola 68000 series chips, has increased significantly over the last few years. At the same time, the size of such chips has grown significantly, as has their power requirements. Such chips are designated as conventional instruction set computers (CISC) and have come to require significant blocks of associated random access memory (RAM) while the applications that have been written to run on computers containing these chips have grown, seemingly without limit, requiring vast amounts of hard drive space. Such CISC devices are not easily usable with portable devices due to their power requirements and size.

Reduced instruction set computers (RISC) were originally used in high-end graphics applications, and in CAE/CAD work stations. The RISC architecture, however, enables an IC to have a significantly smaller die size, because the smaller instruction set of the RISC technology requires fewer transistors to implement, which leads to simpler designs which consequently take less time to complete and to debug. Additionally, smaller chips having shorter signal paths mean that each instruction cycle is of a shorter duration. The relative size of a RISC CPU is significantly smaller than a CISC CPU, for instance, the Intel 386 SL chip is approximately 170 mm², while a RISC chip having similar computational abilities is slightly more than 5 mm².

The small size of RISC-based CPUs makes the RISC architecture ideal for "system-on-chip" (SOC) applications, wherein the CPU and a number of other structures are located on a single chip. Such a SOC architecture may result in a chip that is still considerably smaller than a CISC CPU, but which contains all of the computational and control structures on a single integrated circuit. A SOC architecture will generally include the RISC CPU and some type of local RAM and/or data cache. Additionally, the chip may include internal and external bus controllers, various types of communication ports, an interrupt controller, and pulse width modulator, various configuration registers, various timer/counter structures, and some type of output controller, such as an LCD controller. Such a structure may be configured in a 32-bit architecture, with associated peripherals integrated onto the chip, which integration allows the designer of the portable device incorporating the chip to reduce the development cycle and accelerate the product introduction to market. The chip structure may have an external 16-bit data bus with an integrated, programmable bus controller capable of supporting 8 or 16-bit SRAM, DRAM, EPROM and/or memory devices, which do not require additional buffers in order to function with the integrated circuit. The chip may be operated at either 3.3 volts or 5 volts, which will require between 100 mW and 350 mW, respectively.

By combining a number of peripherals on the chip, and providing an internal bus amongst the CPU and peripherals, it is possible to conduct a number of operations on chip, while simultaneously controlling off-chip operations, such as memory stores and retrieves.

The integrated circuit may include a memory interface which provides multiple programmable chip enables, allowing users to set wait states and memory width, 8 or 16-bits wide. The integrated circuit provides for address decoding and DRAM control logic, which allows an external bus master to perform data transfers without requiring external address decoding or external DRAM controllers. In the case where sequential accesses are being used, the integrated circuit automatically increments the initial memory address supplied by the external bus master, thereby speeding transfers.

PROCEEDINGS OF THE INTERNATIONAL CONFERENCE ON COMPUTER DESIGN: VL IN COMPUTERS AND PROCESSORS, CAMBRIDGE, OCT. 2-4, 1989, no. -, 2 October 1989, INSTITUTE OF ELECTRICAL AND ELECTRONICS ENGINEERS, pages 134-137, GROVES R D ET AL: 'AN IBM SECOND GENERATION RISC PROCESSOR ARCHITECTURE' discloses a method and system for emulated segmentation for RISC processors, and features segment descriptors and protection.

US-A-5 440 710 describes a RISC processor having segment registers, protection attributes, caches and main memory.

IEEE INTERNATIONAL SOLID STATE CIRCUITS CONFERENCE , vol. 37, 1 February 1994, page 212/213, 341 DAC PHAM ET AL: 'TP 12.6: A 3.0 W 75SPECINT92 85SPECFP92 SUPERSCALAR RISC MICROPROCESSOR' discloses an IBM Power PC RISC processor (for portables), with on-chip caches, address translation, segment registers.

COMPUTER, vol. 20, no. 3, March 1987, NEW YORK US, pages 48-67, FURHT B ET AL: 'A SURVEY OF MICROPROCESSOR ARCHITECTURES FOR MEMORY MANAGEMENT' deals with memory management, segment registers, and access rights.

According to the invention, as defined in claim 1, there is provided an on-chip memory protection mechanism for an integrated circuit connected to an off-chip external memory structure, the integrated circuit having a RISC CPU, a memory management module and on-chip internal memory structures, said mechanism enhancing addressable memory space while prohibiting, by using privilege indicators, the overwriting of privileged memory contents, and comprising: a memory map structure for mapping memory addresses of memory contents in the internal memory structures and in the external memory structure; address characteristics associated with the memory addresses including address cacheability and privilege; a memory address register for receiving and storing a memory address from the CPU; plural memory segments for providing the addresses of multiple memory regions to be mapped to the same physical memory structure location and for receiving information about said address characteristics, said information comprising cacheability indicators indicating the cacheability of addresses and the privilege indicators; and a default memory segment spanning an entire memory bank space, wherein said multiple memory regions contain different memory contents having predetermined privileges as indicated by the privilege indicators, and wherein said plural memory segments, upon receipt of a memory address from said address register, compares the memory address to the addresses of the multiple memory regions to locate the physical memory location.

Preferred further features are defined in claims 2 to 7.

The specific invention of this application thus relates to the segmenting of memory addresses which provides for a larger addressable memory space than would otherwise be expected from the 26-bit external address bus of the integrated circuit. In the embodiment, up to eight segments of memory may be defined, each of which may be programmed for start and stop addresses, access privileges, cacheability, memory word-length criteria, and memory bank assignment. Because multiple segments are associated with the chip enable, a single physical memory block may be divided into user and supervisor segments for both data and program memory. Such an arrangement provides additional memory segments over the conventional enable structure, and allow for separation of memory blocks without sacrificing other control capabilities.

These and other objects and advantages of the invention will become more fully apparent as the description which follows is read in connection with the drawings.

### Brief Description of the Drawings

Fig.1 is a block diagram of the system on chip structure of the invention.

Fig. 2 is a detailed block diagram/flow chart of a portion of the system on chip structure of Fig. 1.

Fig. 3 is a block diagram of the segmented memory structure of the invention.

Fig. 4 is a block diagram of a segment descriptor register of the invention.

### Best Mode of Practicing the Invention

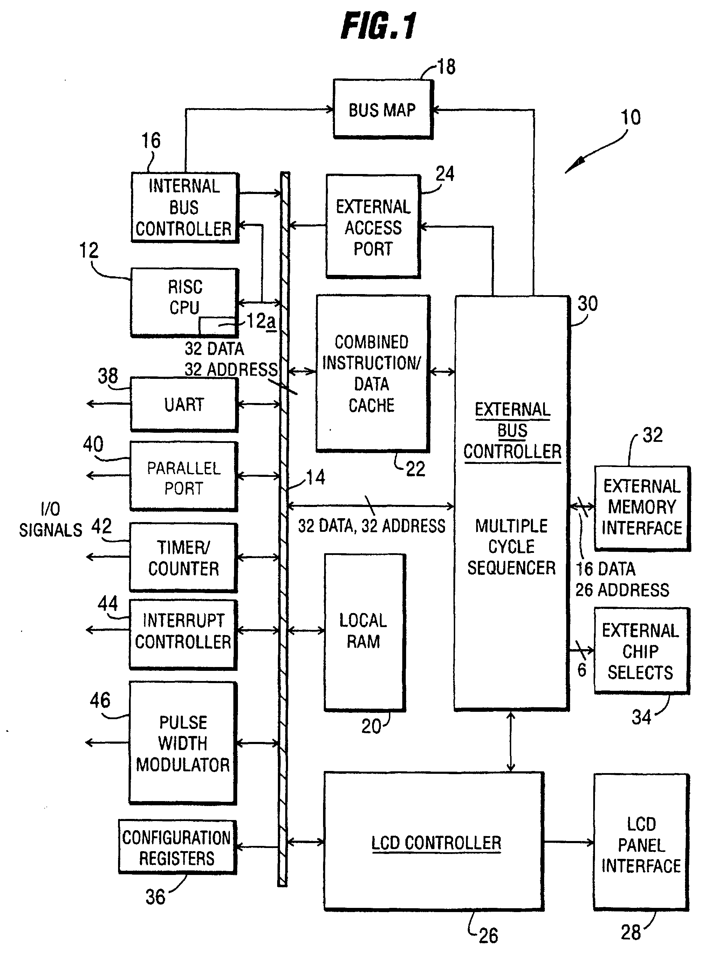

Referring initially to Fig.1, a system on chip (SOC) structure of the invention is depicted generally at 10. IC 10 includes a RISC CPU 12 which is connected to a 32-bit internal bus 14. CPU 12 includes an embedded microcontroller 12a therein in the preferred embodiment. CPU 12 is directly connected to internal bus controller 16, which in turn is connected to bus 14 and to a bus, or memory, map 18. IC 10 further includes a local RAM (SRAM) 20, a combined instruction/data cache 22, and an external access port 24. In the preferred embodiment, IC 10 is intended to connect to a liquid crystal display (LCD) and to that end, includes a LCD controller 26 which is connected to an LCD panel interface 28. An external bus controller 30 is provided and is connected to an external memory interface 32 and external chip selects 34, which may be constructed as part of the external bus controller.

A number of configuration registers 36 are provided, which may be constructed as a part of internal bus controller 16. A number of internal "peripherals" are connected to internal bus 14, and include a universal asynchronous receiver/transmitter (UART) 38, a parallel port 40, a timer/counter 42, an interrupt controller 44, and a pulse width modulator (PWM) 46.

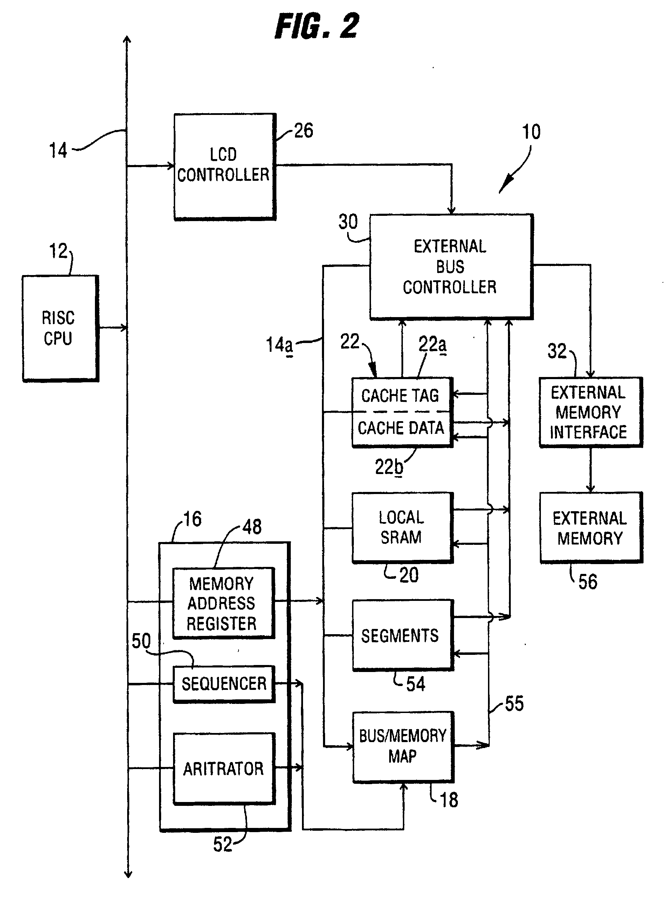

Referring now to Fig. 2, a portion of IC 10 is depicted. For purposes of this description, internal bus controller 16 is shown in more detail, and includes a memory address register 48, a sequencer 50, and an arbitrator 52. The internal bus is depicted in two segments, 14 and 14a. Memory address register 48 receives and stores a memory address from CPU 12 and attempts to locate that address in the various on-chip internal memory structures, such as cache 22, which is split into a cache Tag portion 22a, and a cache data portion 22b, local SRAM 20, memory map 18, or memory segments 54. The address is also passed to sequencer 50 and arbitrator 52 which determine whether the address is a sequential address from the previous memory address request (sequencer 50) and whether there are other operations that take priority over the present search on a particular clock cycle (arbitrator 52). In the case where the memory address is sequential with the immediately prior request, a signal is passed to memory map 18, which sends an abort signal 55 to the internal memory structures, with the exception of the structure that contains the next sequential address. In the event that the address is not found in any of the internal memory structures, external bus controller 30 will initiate a search for the address in external memory 56.

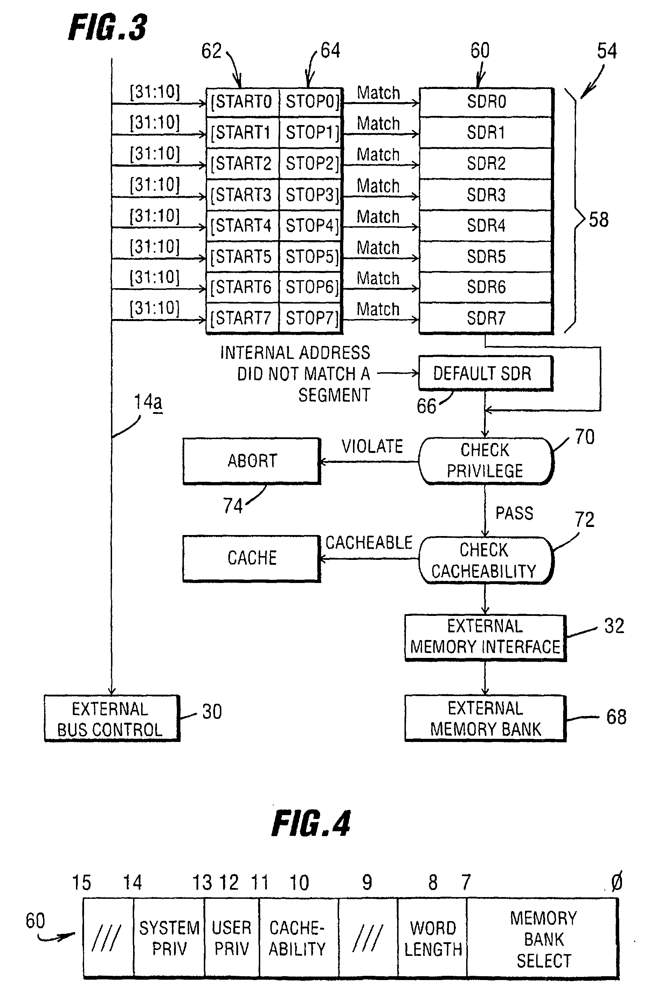

Referring now to Fig. 3, plural memory segments 54 are depicted in greater detail, along with selected associated structures. In the preferred embodiment, there are eight memory segments, segments 0̸-7, shown generally at 58. Each segment includes three registers: A segment descriptor register (SDR) 60, a start register 62, and a stop register 64. A separate default SDR 66 is provided and is used after reset or, if-and-only-if (iff), in the event a search for the memory address is not found in SDRs 0̸-7. Memory segments 54 provide the addresses of multiple memory regions which are to be mapped to the same physical memory structures locations, either local RAM 20 or external memory 56. RAM 20 and external memory 56 both contain multiple memory regions located in a single physical location. A memory region, or memory bank, may be defined in a physical memory structure by setting a starting memory address in one of the start registers 62 and by setting an ending memory address in one of the stop registers 64.

Each SDR contains information about address characteristics, including system privileges, user privileges, cacheability, word length characteristics, and memory bank selection. Each segment may map to only one memory bank, represented generally by block 68, which is located in external memory 56. Start register 62 and stop register 64 determine the boundaries within memory of each segment Each start and stop register is a 32-bit register, and contains a start or stop address of 22-bits, in bit locations 10̸-31. Bits 0̸ - 9 are zero-filled and are used to convert a 22-bit address to a 32-bit address. Default SDR 66 does not have start/stop registers associate therewith, as the default SDR spans the entire memory bank space. All of the start/stop registers will initialize to a zero-fill upon reset, forcing any external memory access to the default segment.

Embedded microcontroller 12a supports eight memory banks, six of which are for SRAM functions and two of which are for DRAM functions. A SRAM bank will reflect the properties of an external SRAM, such as chip selects, wait counts, and bus width. A DRAM bank will reflect the properties of an external DRAM such as nCAS (not Column Address Select), nRAS (not Row Address Select), memory bank size, page mode, wait count, and bus width.

When external bus controller 30 receives an internal address for memory access from memory address register 48, it maps the address to the appropriate segment, or to the default segment, and performs all the necessary checks for privileges, block 70, and cacheability, block 72, according to the characteristics found in the appropriate SDR. Once all of the checks are passed, external bus controller 30 accesses the appropriate memory bank 68, as indicated in the SDR. The memory bank signals external bus controller 30 which external device is to be selected and examines the properties of the external device. The lower 26 bits of the address are used to address the external device.

By providing plural memory segments, the user may map two or more memory regions to the same physical external memory, so long as the memory region has different privileges, which will prevent the overwriting of selected privileged information. Privileges, as used herein, are categorized as user read, user write, system read, and system write.

Referring now to Fig. 4, representative SDR 60 is depicted. SDR 60 is a 16-bit register which includes plural characteristic blocks, each of predetermined lengths. The blocks in SDR 60 are: in bits 0̸-7, memory bank selection indicators; in bit 8, word length mode indicator; in bit 10̸, cacheability indicator; in bits 11 and 12, user privilege indicators; and in bits 13 and 14, system privilege indicators. Memory bank selector block, bits 0̸-7, contains a binary 1 for bank 0̸, binary 2 for bank 1...and binary 8 for bank 7. These indicators are mutually exclusive, and any other entry is invalid. Word length mode indication may contain a 0̸ or 1, indicating 32-bit mode or 16-bit mode, respectively. The cacheability indicator may contain a 0̸ or 1, indicating that a segment is not cacheable or is cacheable, respectively. Privileges for system and users are indicated similarly: a logical 0̸ indicates no privileges, logical (binary) 1 indicates read-only privileges, logical 2 indicates write only privileges and logical 3 indicates read/write privileges.

Each segment may be individually programmed to give the user and/or the system read and/or write access to the memory space associated with the segment This allows for memory management and protection. For example, both code and data may reside in the same external SRAM with the code accessible by the system only and the data by the system and the user. Any violation of the program privileges will cause an abort 74. Requests by LCD controller 26, in the preferred embodiment, are treated as system level requests and is accorded at least a system read privilege.

A segment may be cacheable in which case any access to that segment will be handled by cache 22, or non-cacheable, in which case the access will be handled by external bus controller 30. Because the frame buffer for the LCD is located in main memory (off-chip) the segment containing the frame buffer may not be cached. The external bus controller will ignore the cacheability bit when it receives are request from the LCD controller.

CPU 12 may be configured to support a variety of memory access requests, either in the form of a byte (8-bits) or a word (32-bits). In one configuration of CPU 12, embedded microcontroller 12a has a 16-bit data bus, which requires a word access to take two clock cycles. A half-word mode enables the embedded micro controller to allow half-word accesses to external memory. The embedded microcontroller will treat all word accesses, whether read or write, and half-word accesses, the same, and will take one memory access, or clock cycle, to access the requested information. In the event of a word read, the 16-bit data from memory will be sign-extended in external bus controller 30 and sent to CPU 12 as a 32-bit word. In the event of a word write, external bus controller 30 will write the low order 16-bits of the word from CPU 12 to external memory 56. This protocol is particularly significant when IC 10 is connected to an off-chip device such as a flash memory.

Bank select block includes eight mutually exclusive bits. A logical 1 in any bit position selects the memory bank associated with that position.

Because most address requests by CPU 12 will be to internal locations, the need for additional clock cycles to locate off-chip addresses is greatly reduced by providing memory segments 54. Particularly in the case where addresses are sequential, the memory contents will be retrieved within a single clock cycle.

Although a preferred embodiment of the memory protection mechanism of the invention has been disclosed herein, it should be appreciated that further variations and modifications may be made thereto.

## Claims

1. An on-chip memory protection mechanism for an integrated circuit (10) connected to an off-chip external memory structure (56), the integrated circuit having a RISC CPU (12), a memory management module (16) and on-chip internal memory structures (22, 20, 18), said mechanism enhancing addressable memory space while prohibiting, by using privilege indicators (60), the overwriting of privileged memory contents, and comprising:
a memory map structure (18, 54) for mapping memory addresses of memory contents in the internal memory structures and in the external memory structure;
address characteristics (60) associated with the memory addresses including address cacheability and privilege;
a memory address register (48) for receiving and storing a memory address from the CPU;
plural memory segments (54) for providing the addresses of multiple memory regions to be mapped to the same physical memory structure location and for receiving information about said address characteristics, said information comprising cacheability indicators indicating the cacheability of addresses and the privilege indicators; and
a default memory segment (66) spanning an entire memory bank space, wherein
said multiple memory regions contain different memory contents having predetermined privileges as indicated by the privilege indicators, and wherein said plural memory segments, upon receipt of a memory address from said address register, compares the memory address to the addresses of the multiple memory regions to locate the physical memory location.

2. A memory protection mechanism according to claim 1, wherein said plural memory segments (54) each include a segment descriptor register (60) for setting said address characteristics, a start register (62) for receiving the starting address of a physical memory block constituting a said memory region, and a stop register (64) for setting the ending address of said physical memory block.

3. A memory protection mechanism according to claim 2, wherein said segment descriptor register (60) includes plural characteristic blocks associated with the address characteristics, including a system privilege block, a user privileges block, a cacheability block, a word-length block, and a memory bank assignment block.

4. A memory protection mechanism according to claim 2, wherein said default memory segment (66) comprises a default segment descriptor register which is used after a system reset and if and only if a memory address does not match an address in any other segment descriptor register.

5. A memory protection mechanism as claimed in claim 1, wherein the plural memory segments (54) each include:
a segment descriptor register (60) for receiving said address characteristics,
a start register (62) for setting the starting address of a physical memory block constituting a said memory region, and
a stop register (64) for setting the ending address of said physical memory block.

6. A memory protection mechanism according to claim 5, wherein said segment descriptor register includes plural characteristic blocks associated with the address characteristics, including a system privilege block, a user privileges block, a cacheability block, a word-length block, and a memory bank assignment block.

7. A memory protection mechanism according to claim 5, wherein said default memory segment (66) comprises a default segment descriptor register which is used after a system reset and if and only if a memory address does not match an address in any other segment descriptor register.

## Patentansprüche

1. On-Chip-Speicherschutzmechanismus für einen integrierten Schaltkreis (10), welcher an eine externe Off-Chip-Speicherstruktur (56) angeschlossen ist, wobei der integrierte Schaltkreis eine RISC-CPU (12), ein Speichermanagementmodul (16) und interne On-Chip-Speicherstrukturen (22, 20, 18) aufweist, wobei der Mechanismus einen adressierbaren Speicherraum erweitert, während er unter Verwendung von Privilegintegratoren (60) ein Überschreiben privilegierter Speicherinhalte verhindert, und welcher des Weiteren aufweist:
- eine Speicherabbildungsstruktur (18, 54) zum Abbilden von Speicheradressen von Speicherinhalten in den inneren Speicherstrukturen und in der externen Speicherstruktur,
- Adresscharakteristika (60), welche mit den Speicheradressen assoziiert sind und welche umfassen die Adresscachebarkeit und Privilegien,
- ein Speicheradressregister (48) zum Empfangen und Speichern einer Speicheradresse von der CPU,
- mehrere Speichersegmente (54) zum Bereitstellen der Adressen von mehrfachen Speicherbereichen, welche auf denselben physikalischen Speicherstrukturort abzubilden sind, und zum Empfangen von Informationen im Hinblick auf die Speichercharakteristika, wobei die Information Cachebarkeitsindikatoren, welche auf die Cachebarkeit von Adressen hinweisen, und Privilegindikatoren aufweisen, und
- ein Standardspeichersegment (66), zum Aufspannen eines Gesamtspeicherbankraums,
- wobei die mehrfachen Speicherbereiche unterschiedliche Speicherinhalte mit vorbestimmten Privilegien aufweisen, welche durch die Privilegindikatoren angezeigt werden, und
- wobei die mehrfachen Speichersegmente auf den Empfang einer Speicheradresse vom Adressregister die Speicheradresse mit den Adressen der mehrfachen Speicherbereiche vergleichen, um den physikalischen Speicherort zu lokalisieren.

2. Speicherschutzmechanismus nach Anspruch 1,
bei welchem die mehrfachen Speichersegmente (54) jeweils ein Segmentdeskriptorregister (60) zum Einstellen der Adresscharakteristika, ein Startregister (62) zum Empfangen der Startadresse eines physikalischen Speicherblocks, welcher den Speicherbereich bildet, und ein Stoppregister (64) aufweisen zum Einstellen der Endadresse des physikalischen Speicherblocks.

3. Speicherschutzmechanismus nach Anspruch 2,
bei welchem das Segmentdeskriptorregister (60) mehrfache charakteristische Blöcke aufweist, welche mit den Adresscharakteristika assoziiert sind und welche mit einen Systemprivilegblock, einen Benutzerprivilegblock, einen Cachebarkeitsblock, einen Wortlängenblock und einen Speicherbankzuordnungsblock aufweisen.

4. Speicherschutzmechanismus nach Anspruch 2,
bei welchem das Standardspeichersegment (66) ein Standardsegmentdeskriptorregister aufweist, welches nach einem Rücksetzen oder Reset des Systems verwendet wird und nur dann, falls eine Speicheradresse nicht zu einer Adresse in irgendeinem anderen Segmentdeskriptorregister passt.

5. Speicherschutzmechanismus nach Anspruch 1,
bei welchem die mehreren Speichersegmente (54) jeweils aufweisen:
- ein Segmentdeskriptorregister (60) zum Empfangen der Adresscharakteristika,
- ein Startregister (62) zum Einstellen der Startadresse eines physikalischen Speicherblocks, welcher den Speicherbereich bildet, und
- ein Stoppregister (64) zum Einstellen der Endadresse des physikalischen Speicherblocks.

6. Speicherschutzmechanismus nach Anspruch 5,
bei welchem das Segmentdeskriptorregister mehrfache charakteristische Blöcke aufweist, welche mit den Speichercharakteristika assoziiert sind und welche einen Systemprivilegblock, einen Benutzerprivilegblock, einen Cachebarkeitsblock, einen Wortlängenblock, einen Speicherbankzuordnungsblock aufweisen.

7. Speicherschutzmechanismus nach Anspruch 5,
bei welchem das Standardspeichersegment (66) ein Standardsegmentdeskriptorregister aufweist, welches nach einem Rücksetzen des Systems oder einem Systemreset verwendet wird und nur dann, wenn eine Speicheradresse nicht zu einer Adresse in irgendeinem Segmentdeskriptorregister passt.

## Revendications

1. Mécanisme de protection de mémoire incorporé à la puce pour un circuit intégré (10) relié à une structure de mémoire externe non incorporée à la puce (56), le circuit intégré comprenant une unité CPU (unité centrale de traitement) de RISC (ordinateur à jeu d'instructions réduit) (12), un module de gestion de mémoire (16) et des structures de mémoire internes incorporées à la puce (22, 20, 18), ledit mécanisme augmentant l'espace de mémoire adressable tout en interdisant, à l'aide d'indicateurs de privilège (60), l'écrasement du contenu de mémoire privilégié, et comprenant:
une structure de carte de mémoire (18, 54) pour mapper des adresses de mémoire de contenu de mémoire dans les structures de mémoire internes et dans la structure de mémoire externe ;
des caractéristiques d'adresse (60) associées aux adresses de mémoire comprenant des privilèges et la possibilité de mise en mémoire cache d'adresses ;
un registre d'adresse de mémoire (48) pour recevoir et stocker une adresse de mémoire en provenance de l'unité CPU ;
une multiplicité de segments de mémoire (54) pour fournir les adresses de multiples régions de mémoire à mapper au même emplacement de structure de mémoire physique et pour recevoir des informations concernant lesdites caractéristiques d'adresse, lesdites informations comprenant des indicateurs de possibilité de mise en mémoire cache indiquant la possibilité de mise en mémoire cache d'adresses et les indicateurs de privilège ; et
un segment de mémoire par défaut (66) couvrant tout un espace de banc de mémoire, dans lequel
lesdites multiples régions de mémoire contiennent différents contenus de mémoire ayant des privilèges prédéterminés tels qu'indiqués par les indicateurs de privilège, et dans lequel ladite multiplicité de segments de mémoire, à la réception d'une adresse de mémoire en provenance dudit registre d'adresse, compare l'adresse de mémoire aux adresses des multiples régions de mémoire pour localiser l'emplacement de mémoire physique.

2. Mécanisme de protection de mémoire selon la revendication 1, dans lequel chaque segment de ladite multiplicité de segments de mémoire (54) comprend un registre de descripteur de segment (60) pour placer lesdites caractéristiques d'adresse, un registre de début (62) pour recevoir l'adresse de début d'un bloc de mémoire physique constituant une dite région de mémoire, et un registre de fin (64) pour placer l'adresse de fin dudit bloc de mémoire physique.

3. Mécanisme de protection de mémoire selon la revendication 2, dans lequel ledit registre de descripteur de segment (60) comprend une multiplicité de blocs de caractéristiques associés aux caractéristiques d'adresse, comprenant un bloc de privilège système, un bloc de privilège utilisateur, un bloc de possibilité de mise en mémoire cache, un bloc de longueur de mot, et un bloc d'affectation de banc de mémoire.

4. Mécanisme de protection de mémoire selon la revendication 2, dans lequel ledit segment de mémoire par défaut (66) comprend un registre de descripteur de segment par défaut qui est utilisé après une réinitialisation du système et si, et seulement si, une adresse de mémoire ne correspond à aucune adresse dans aucun autre registre de descripteur de segment.

5. Mécanisme de protection de mémoire selon la revendication 1, dans lequel chaque segment de la multiplicité de segments de mémoire (54) comprend :
un registre de descripteur de segment (60) pour placer lesdites caractéristiques d'adresse,
un registre de début (62) pour recevoir l'adresse de début d'un bloc de mémoire physique constituant une dite région de mémoire, et
un registre de fin (64) pour placer l'adresse de fin dudit bloc de mémoire physique.

6. Mécanisme de protection de mémoire selon la revendication 5, dans lequel ledit registre de descripteur de segment comprend une multiplicité de blocs de caractéristiques associés aux caractéristiques d'adresse, comprenant un bloc de privilège système, un bloc de privilège utilisateur, un bloc de possibilité de mise en mémoire cache, un bloc de longueur de mot, et un bloc d'affectation de banc de mémoire.

7. Mécanisme de protection de mémoire selon la revendication 5, dans lequel ledit segment de mémoire par défaut (66) comprend un registre de descripteur de segment par défaut qui est utilisé après une réinitialisation du système et si, et seulement si, une adresse de mémoire ne correspond à aucune adresse dans aucun autre registre de descripteur de segment.
